# EUROPÄISCHE PATENTSCHRIFT

(11) **EP 1 507 046 B1**
(45) Veröffentlichungstag und Bekanntmachung des Hinweises auf die Patenterteilung: **02.07.2008**
(21) Anmeldenummer: 04019417.7
(22) Anmeldetag: 16.08.2004
(51) Int. Cl.: E04B 1/74

(54) **Bausatz für ein Energiesparhaus**
Construction set for an energy conserving house
Ensemble d'éléments de construction pour une maison à consommation d'énergie réduite

(30) Priorität: 14.08.2003 DE 20312602 U
(43) Veröffentlichungstag der Anmeldung: 16.02.2005
(73) Patentinhaber: Sandmeir-Exclusiv Stahlbau GmbH, 86641 Rain/Lech (DE)
(72) Erfinder: Sandmeir, Peter, 86641 Rain/Lech (DE)
(74) Vertreter: Grünecker, Kinkeldey, Stockmair & Schwanhäusser Anwaltssozietät

(56) Entgegenhaltungen:
- DE-A1- 3 312 998
- DE-A1- 3 820 621
- DE-A1- 10 019 019
- FR-A- 2 448 697
- US-B1- 6 182 408

## Beschreibung

Die Erfindung bezieht sich auf einen Bausatz für ein Energiesparhaus, mit einem isolierverglasten Wintergarten und einem Hauskörper.

Aus der Praxis ist hinlänglich bekannt, dass der Anbau von Wintergärten an einem gut isolierten Hauskörper durch passive Nutzung von Sonnenenergie den Energieverbrauch eines Hauses weiter senkt. Dabei ist auch bekannt, dass die Ausrichtung des Wintergartens nach Süden aufgrund der erhöhten Sonneneinstrahlung den meisten Energiegewinn bringt. Ein derartiges Energiesparhaus ist beispielsweise aus der FR-A-2448697 bekannt. Dort befindet sich ein Hauskörper in einem anderen Gebäudekörper, dessen Südfassade verglast ist. Während dieser Energiegewinn in der kalten Jahreszeit erwünscht ist, führt dieser Energiegewinn in der heißen Jahreszeit zu einem unangenehmen Wohnklima. Der Aufenthalt in dem Wintergarten ist dann nur möglich, wenn umfangreiche Maßnahmen getroffen werden, um eine Abschattung bzw. Kühlung herbeizuführen.

Hier setzt die Erfindung ein, die es sich zur Aufgabe gemacht hat, einen Bausatz für ein Energiesparhaus der eingangs genannten Art zur Verfügung zu stellen, der zum einen eine möglichst intensive Nutzung der Sonnenenergie ermöglicht, zum anderen aber ein erträgliches Wohnklima zur Verfügung stellt, und darüber hinaus kostengünstig zu fertigen ist.

Diese Aufgabe wird dadurch gelöst, dass das eingeschlossene Volumen des Wintergartens das des Hauskörpers um ein Vielfaches übersteigt und der Wintergarten den Hauskörper allseitig in Form einer Wetterhöhle umgibt. Ein aus einem solchen Bausatz hergestelltes Energiesparhaus besteht also praktisch aus einem großvolumigen äußeren, isolierverglasten Glashaus, in dem ein kleinerer Hauskörper steht. Der Hauskörper selbst ist weder windnoch regenausgesetzt, so dass er nicht mit einem Wetterschutz, beispielsweise einem regendichten Dach versehen werden muß. Auch die Isolierung des Hauskörpers kann auf ein Minimum reduziert werden, da innerhalb der Wetterhöhle stets ein gemäßigtes Klima herrscht. Im Gegensatz zu kleinvolumigen, sog. Anbauwintergärten, ermöglicht der großvolumige, den Hauskörper vollständig umgebende Wintergarten ausreichende Lüftungsmöglichkeiten in der warmen Jahreszeit, die das Klima innerhalb des Wintergartens angenehm machen. Eine einfache Abschattung der Glasflächen genügt, eine Klimatisierung ist nicht erforderlich. Obwohl der Bausatz praktisch zwei Gebäude, nämlich den Wintergarten und den Hauskörper vorsieht, können die Baukosten gering gehalten werden, da sowohl der Wintergarten als auch der Hauskörper konstruktiv ausgesprochen einfach zu gestalten sind und keine ausgeklügelten konstruktiven Maßnahmen zur Energieeinsparung erfordern.

Gemäß einer bevorzugten Ausführungsform ist der Hauskörper außermittig innerhalb des Wintergartens anordenbar, wobei der Wintergarten Öffnungen zum Durchführen von Versorgungskanälen, wie z.B. Kamin, Luftschaft und dergleichen zum Hauskörper aufweist.

Ganz besonders bevorzugt, wenn der Wintergarten im Sockelbereich Zuluftöffnungen und im Firstbereich Abluftöffnungen aufweist. Auf diese Weise ist es möglich, einen stetigen Luftzug entlang der Glasflächen zu erreichen. Da die Glasflächen aufgrund des großen Volumens des Wintergartens einen großen Abstand zum Hauskörper aufweisen, wird durch den Luftstrom unmittelbar unterhalb der Glasflächen ein wirksamer Abtransport der Wärme ermöglicht, ohne dass sich für den Bewohner des Energiesparhauses unangenehme Zugluft bemerkbar macht. Konstruktiv besonders einfach lassen sich die Zuluftöffnungen dadurch verwirklichen, dass im Sockelbereich nach innen öffnende, um ein unten liegendes Scharnier ausgebildete Klappen angebracht sind. Durch diese Klappen wird kühle Außenluft an die Innenseite der Glasflächen gelenkt, die durch die stetige Erwärmung an den Glasflächen entlang nach oben zum First des Wintergartens strömt und dort aus den Abluftöffnungen austritt.

Auf einfache Weise läßt sich eine zugfreie Entlüftung erreichen, wenn sich eine Vielzahl von Zuluft- und Abluftöffnungen über die gesamte First- bzw. Trauflänge des Wintergartens erstreckt.

Die Wirksamkeit der Lüftung kann dadurch weiter verbessert werden, wenn zur Bildung eines Abluftkanals mit Abstand etwa planparallel unterhalb der Dachflächen des Wintergartens eine Innenabschattung vorgesehen ist. Die aus dem Sockelbereich angesaugte kühle Luft streicht dann zwischen der Innenabschattung und der Dachfläche nach oben und nimmt dabei die durch das Dach einstrahlende Wärme mit.

Ganz besonders bevorzugt wird, wenn der Hauskörper mit einer feuchtigkeitsausgleichenden Wandoberfläche versehen ist. Hierzu eignet sich in besonderer Weise Lehmputz, der bekanntermaßen gleich gut Feuchtigkeit aufnehmen und wieder abgeben kann. Da der Lehmputz nicht der Witterung, beispielsweise Regen ausgesetzt ist, müßten an dem Putz keine, die feuchtigkeitsausgleichende Wirkung hemmende Maßnahmen vorgesehen sein, um eine Witterungsbeständigkeit herzustellen.

Der Bausatz umfaßt ferner einen Swimmingpool auf, der innerhalb des Wintergartens als Flüssigkeitsverdunster anordenbar ist. Gleichzeit dient ein solcher Swimnmingpool auch dem Temperaturausgleich, da das in dem Swimmingpool vorgesehene Wasser auch die durch die Sonneneinstrahlung erzeugte Wärmeenergie speichert.

Besonders bevorzugt wird, wenn die Höhe des Wintergartens die Höhe des Hauskörpers mehrfach übersteigt. Das hat nicht nur den Vorteil, dass der Wintergarten ein für ein angenehmes Klima ausreichendes Volumen aufweist, sondern darüber hinaus auch den Vorteil, dass das Dach des Hauskörpers als Terrasse benutzt werden kann. Aufgrund des als Wetterhöhle ausgebildeten Wintergartens benötigt der Hauskörper selbst kein Dach mehr.

In bevorzugter Weise ist ferner vorgesehen, dass der Bausatz einen ersten Wärmetauscher umfaßt, der im Erdreich unterhalb des Wintergartens anordenbar ist, und einen zweiten Wärmetauscher, der mit der Innenluft des Hauskörpers in Verbindung bringbar ist. Diese beiden Wärmetauscher ermöglichen, dass die Abluft des Hauskörpers im Winter zur Erwärmung des Bodens unterhalb des Wintergartens verwendet werden kann. Im Sommer kann die Anlage so betrieben werden, dass die Luft zur Kühlung zunächst durch die Wärmetauscher im Erdreich geschickt wird, bevor sie in den Hauskörper eintritt.

Ferner ist bevorzugt, wenn der Bausatz Blattpflanzen als Luftfilter umfaßt, die im Innern des Wintergartens anordenbar sind. Dieses Blattgrün sorgt selbst auch für einen Feuchtigkeitsausgleich und dient zugleich der natürlichen Abschattung innerhalb des Wintergartens.

Besonders bevorzugt wird ferner, wenn der Bausatz auch einen auf der Außenseite der Dachfläche in zwei Richtungen verfahrbares Außenabschattungspaneel aufweist. Mit einem solchen verfahrbaren Außenabschattungspaneel ist es möglich, je nach Sonnenstand an vorbestimmten Stellen innerhalb des Wintergartens Schatten zu erzeugen.

Besonders bevorzugt wird in diesem Zusammenhang, wenn das Außenabschattungspaneel aus fotovoltaischen Elementen aufgebaut ist. Auf diese Weise kann das Paneel der Sonne nachgefahren werden, so dass der Wirkungsgrad der fotovoltaischen Elemente erhöht werden kann.

Gemäß einer Weiterbildung kann zudem in vorteilhafter Weise vorgesehen sein, dass auf der Unterseite des Abschattungspaneel Reinigungsdüsen angebracht sind. Es ist somit ohne zusätzlichen Aufwand möglich, auf einfache Weise auch die Außenglasfläche des Wintergartens zu reinigen.

Im folgenden wird ein Ausführungsbeispiel der Erfindung anhand einer Zeichnung näher erläutert.

Es zeigen:
- Fig. 1: in einer perspektivischen Ansicht ein aus einem erfindungsgemäßen Bausatz aufgebautes Energiesparhaus;
- Fig. 2: einen Grundriß durch das Energiesparhaus aus Fig. 1;
- Fig. 3: ein Detail der Wetterhülle des Energiesparhauses aus Fig. 1 in einer vergrößerten Darstellug, und
- Fig. 4: einen Vertikalschnitt durch das Energiesparhaus aus Fig. 1.

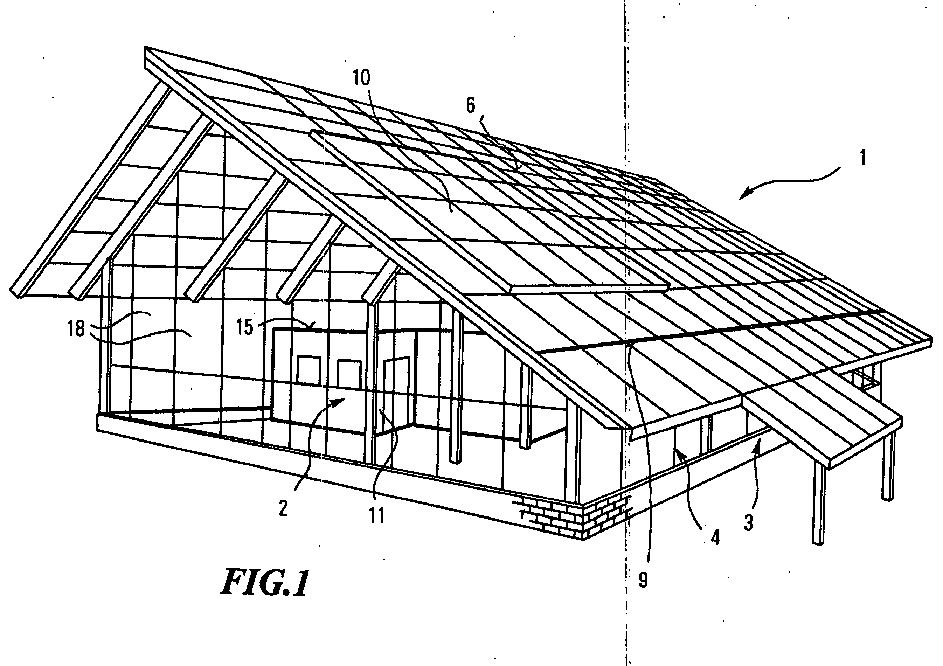

Fig. 1 zeigt ein auf einen erfindungsgemäßen Bausatz aufgebautes Energiesparhaus. Der Bausatz umfaßt hierbei einen isolierverglasten Wintergarten 1 und einen Hauskörper 2. Der Wintergarten 1 umschließt den Hauskörper 2 allseitig in Form einer Wetterhülle.

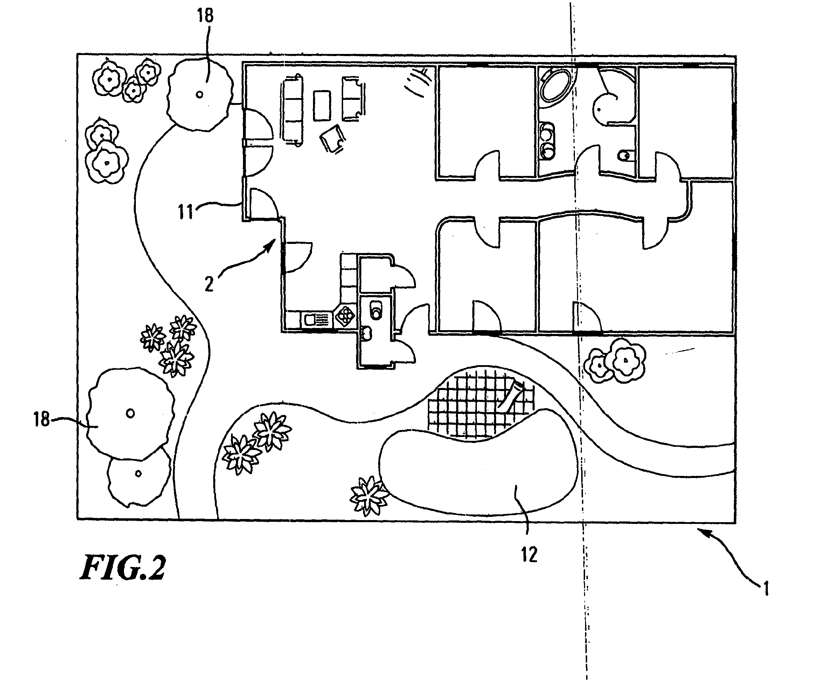

Wie besser aus Fig. 2 ersichtlich ist, ist bei dem hier gezeigten Ausführungsbeispiel die Grundrißfläche des Wintergartens etwa 2 ½ mal so groß, wie die Grundrißfläche des Hauskörpers. Die Höhe des Wintergartens im First beträgt ebenfalls etwa das Zweieinhalbfache der Höhe des Hauskörpers. Insgesamt ist das von dem Wintergarten eingeschlossene Volumen etwa 5 mal so groß wie das Volumen des Hauskörpers.

Der Hauskörper 2 ist innerhalb des als Wetterhülle ausgebildeten Wintergartens 1 außermittig angeordnet, wobei der Hauskörper an den nächstgelegenen Wänden des Wintergartens mit über Öffnungen mit der Außenumgebung verbunden ist. Hierbei kann es sich um Luftschächte, Kamin und andere Versorgungskanäle handeln.

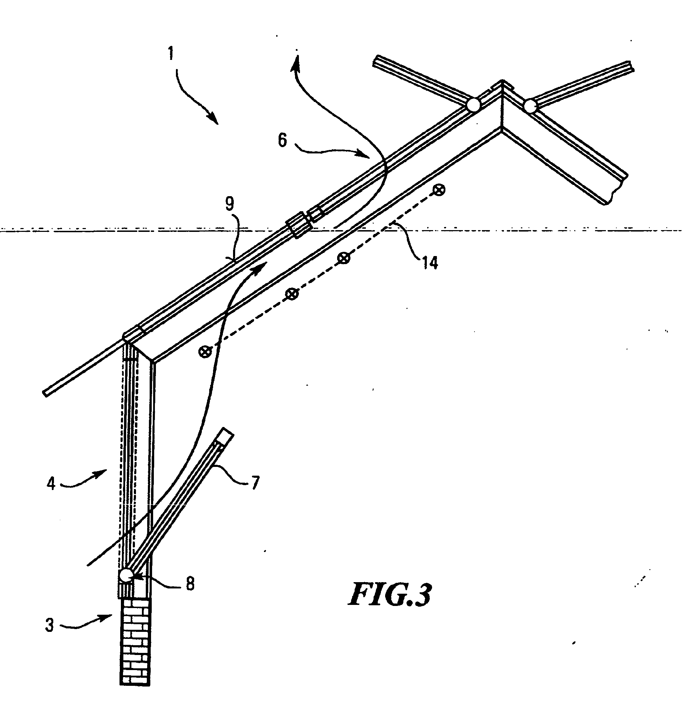

Wie besser aus der Detailansicht aus Fig. 3 ersichtlich ist, weist der Wintergarten 1 im Sockelbereich 3 Zuluftöffnungen 4 und im Firstbereich 5 Abluftöffnungen 6 auf. Die Zuluftöffnungen 4 werden durch Klappen 7 gebildet, die nach innen in den Wintergarten öffnen und um ein untenliegendes Scharnier 8 schwenkbar angeordnet sind. Bei dem hier gezeigten Ausführungsbeispiel sind eine Vielzahl von Zuluftöffnungen und Abluftöffnungen 6 vorgesehen, welche sich über die gesamte First- bzw. Trauflänge des Wintergartens 1 erstrecken.

Wie ebenfalls gut aus der Detailansicht aus Fig. 3 ersichtlich ist, ist zur Bildung eines Abluftkanals mit Abstand etwa planparallel unter den Dachflächen eine Innenabschattung vorgesehen. Der Abstand dieser Innenabschattung zu der Glasfläche beträgt etwa 20 - 40 cm. Diese Innenabschattung dient an Tagen mit extremen solarem Eintrag als Wärmespiegel hinter den Glasscheiben. In Kombination mit der oben angesprochenen mechanischen Lüftung wird der Wärmestau zwischen den Scheiben des Wintergartens und der Innenabschattung verhindert. Praktisch wird ein Abluftkamin gebildet, der für einen erhöhten Luftdurchsatz sorgt. Nachzutragen bleibt an dieser Stelle, dass die Dachglasflächen aus Isolierglas bestehen, wobei die äußere Glasscheibe aus einem Einscheibensicherheitsglas und die innere, untere Scheibe aus einem Verbundsicherheitsglas besteht.

Neben der Innenverschattung besitzt der Bausatz zudem auch eine Außenverschattung. Hierzu ist, wie aus Fig. 1 ersichtlich ist, auf der Außenseite der Dachfläche 9 ein in zwei Richtungen verfahrbares Außenabschattungspaneel 10 vorgesehen. Das Außenabschattungspaneel 10 ist aus einer Vielzahl von fotovoltaischen Elementen aufgebaut, die zur Stromgewinnung dienen. Auf der Unterseite des Abschattungspaneels sind hier nicht näher dargestellte Reinigungsdüsen vorgesehen, mit denen die Dachfläche 9 gereinigt werden kann. Das Außenabschattungspaneel läuft auf hier der Übersichtlichkeit halber nicht näher dargestellten Schienen, die kreuzweise zueinander angeordnet sind. Damit kann das Abschattungspaneel jede Stelle der Dachfläche 9 erreichen.

Der Hauskörper 2 selbst ist mit feuchtigkeitsausgleichenden Randoberflächen 11 versehen, die im hier dargestellten Ausführungsbeispiel aus Lehmputz bestehen. Zur Wärmespeicherung und auch zur Möglichkeit der Flüssigkeitsverdunstung sieht der Bausatz einen Swimmingpool 12 vor, welcher innerhalb des Wintergartens 1 angeordnet ist. Zusätzlich kann zur Wärmespeicherung auch ein isolierter Wasserspeicher vorgesehen sein, in welchem über einen Wärmetauscher Sonnenenergie eingespeichert werden kann, die sowohl für die Warmwasserbereitung als auch im Winter für die Heizung des Hauskörpers verwendet werden kann.

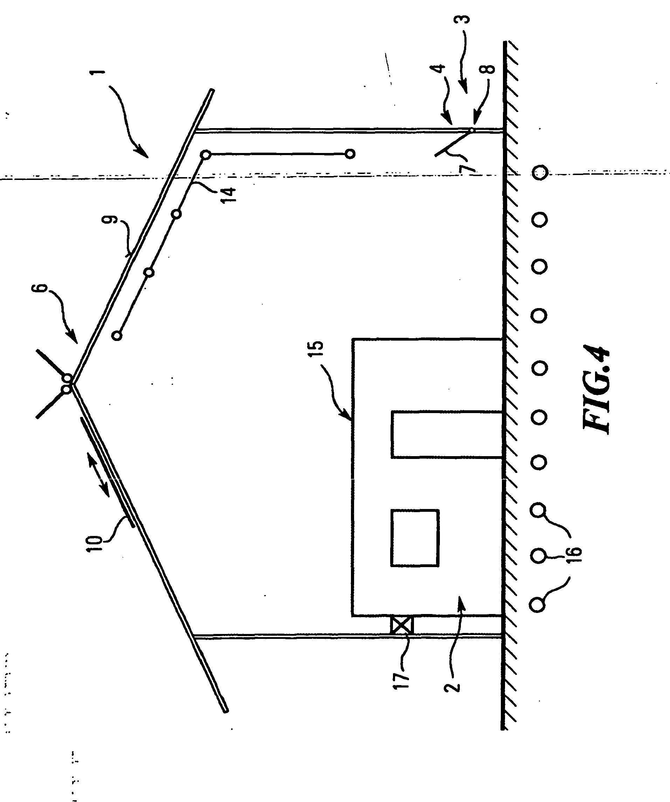

Wie besonders gut aus der Querschnittsansicht in Fig. 4 ersichtlich ist, weist der bei dem hier dargestellten Ausführungsbeispiel gezeigte Hauskörper 2 einen begehbare Flachdecke auf. Ein Dach im Sinne eines Wetterschutzes benötigt der Hauskörper 2 nicht, da dieser Wetterschutz durch den Wintergarten 1 gebildet wird.

Der Bausatz weist darüber hinaus auch noch einen ersten Wärmetauscher auf, welcher im Erdreich unterhalb des Wintergartens angeordnet werden kann, und einen zweiten Wärmetauscher, der mit der Innenluft des Hauskörpers in Verbindung steht. Der erste Wärmetauscher, der im Erdreich angeordnet ist, dient zur Abkühlung der in den Hauskörper eingeleiteten Frischluft und ist eine Art natürliche Klimaanlage. Der zweite, im Hauskörper angeordnete Wärmetauscher besteht aus einem Kreuzstromwärmetauscher, über welchen die verbrauchte aber warme Abluft an die Außenumgebung gebracht wird und über welchen kalte, aber hygienisch frische Zuluft zugeführt wird, die sich durch den Kontakt der umgebenden Mantelflächen im Wärmetauscher erwärmt. Diese Lüftung ist insbesondere für die kältere Jahreszeit vorgesehen, während in der wärmeren Jahreszeit bevorzugt wird, dass die Luft über den ersten Wärmetauscher, der im Erdreich vergraben ist, angesaugt wird.

Schließlich kann noch vorgesehen sein, dass unterhalb des Hauskörpers eine ca. 1 m dicke Schotterschicht vorgesehen ist, in welcher Tonrohre eingegraben sind, mit denen ähnlich, wie mit dem Erdwärmetauscher der Hauskörper temperiert werden kann. Die Vorteile des erfindungsgemäßen Bausatzes liegen auf der Hand. Durch den im Volumen erheblich größer als herkömmliche Wintergärten ausgebildeten isolierverglasten Wintergarten läßt sich eine wirksame Lüftung und Temperierung erreichen, ohne dass störende Zugluft erzeugt wird. Dadurch, dass der Hauskörper durch den Wintergarten allseitig umgeben wird, kann der Hauskörper auf sämtliche Wetterschutzbekleidungen verzichten. So wird z.B. weder ein Dach benötigt, noch eine wetterfeste Fassade. Es ist daher möglich, den Hauskörper mit feuchtigkeitsregulierendem Lehm zu verputzen. Zudem kann das "Dach" des Hauskörpers als Terrasse genutzt werden. Die Energiekosten zum Beheizen des Hauskörpers werden erheblich verringert, da der Hauskörper weder Wind noch Wetter ausgesetzt ist. Darüber hinaus sorgt der Wintergarten für eine Anhebung des Temperaturniveaus, so dass selbst in der kälteren Jahreszeit die Heizung des Hauskörpers lediglich für eine geringere Temperaturanhebung sorgen muß.

Ferner ist vorgesehen, dass in dem Wintergarten eine Vielzahl von Blattpflanzen vorgesehen sind, die nicht nur klimaausgleichend, sondern auch als Luftfilter sowie als Abschattung dienen. Insgesamt wird innerhalb des Wintergartens ein Zwischenklima geschaffen, welches es dem Bewohner ermöglicht, während des ganzen Jahres nach "draußen" zu gehen und sich im Grünen aufzuhalten. Dabei kann auf einfache Weise vorgesehen sein, dass an den Zuluftöffnungen Pollenfilter 13 vorgesehen sind, die ermöglichen, dass der gesamte Innenraum des Wintergartens 1 pollenfrei ist.

## Patentansprüche

1. Bausatz für ein Energiesparhaus, mit einem isolierverglasten Wintergarten (1) und einem Hauskörper (2), **dadurch gekennzeichnet, dass** das eingeschlossene Volumen des Wintergartens (1) das des Hauskörpers (2) um ein Vielfaches übersteigt und der Wintergarten (1) den Hauskörper (2) allseitig in Form einer Wetterhülle umgibt.

2. Bausatz nach Anspruch 1, **dadurch gekennzeichnet, dass** der Hauskörper (2) außermittig innerhalb des Wintergartens (1) anordenbar ist und der Wintergarten Öffnungen zum Durchführen von Versorgungskanälen wie Kamin oder Lüftungsschacht zum Hauskörper aufweist.

3. Bausatz nach Anspruch 1 oder 2, **dadurch gekennzeichnet, dass** der Wintergarten (1) im Sockelbereich (3) Zuluftöffnungen (4) und im Firstbereich Abluftöffnungen (6) aufweist.

4. Bausatz nach Anspruch 3, **dadurch gekennzeichnet, dass** die Zuluftöffnungen (4) durch nach innen öffnende, um ein untenliegendes Scharnier (8) schwenkbare Klappen (7) gebildet sind.

5. Bausatz nach Anspruch 3 oder 4, **dadurch gekennzeichnet, dass** sich eine Vielzahl von Zuluft- und Abluftöffnungen (4, 6) über die gesamte First- bzw. Trauflänge des Wintergartens erstrecken.

6. Bausatz nach einem der Ansprüche 1 bis 5, **dadurch gekennzeichnet, dass** zur Bildung eines Abluftkanals mit Abstand etwa planparallel unterhalb der Dachfläche (9) eine Innenabschattung (14) vorgesehen ist.

7. Bausatz nach einem der Ansprüche 1 bis 6, **dadurch gekennzeichnet, dass** der Hauskörper (2) mit feuchtigkeitsausgleichenden Wandoberflächen (11) versehen ist.

8. Bausatz nach einem der Ansprüche 1 bis 7, **dadurch gekennzeichnet, dass** der Bausatz ferner einen Swimmingpool (12) umfaßt, der innerhalb des Wintergartens (1) als Flüssigkeitsverdunster anordenbar ist.

9. Bausatz nach einem der Ansprüche 1 bis 8, **dadurch gekennzeichnet, dass** die Höhe des Wintergartens (1) die Höhe des Hauskörpers (2) mehrfach übersteigt.

10. Bausatz nach einem der Ansprüche 1 bis 9, **dadurch gekennzeichnet, dass** der Hauskörper (2) dachlos mit einer begehbaren Flachdecke (15) versehen ist.

11. Bausatz nach einem der Ansprüche 1 bis 10, **dadurch gekennzeichnet, dass** der Bausatz ferner einen ersten Wärmetauscher (16) umfaßt, welcher im Erdreich unter dem Wintergarten (1) anordenbar ist, und einen zweiten Wärmetauscher (17), der mit der Innenluft des Hauskörpers (2) in Verbindung steht.

12. Bausatz nach einem der Ansprüche 1 bis 11, **dadurch gekennzeichnet, dass** der Bausatz Pflanzen (18) als Luftfilter umfaßt, die im Innern des Wintergartens (1) anordenbar sind.

13. Bausatz nach einem der Ansprüche 1 bis 12, **dadurch gekennzeichnet, dass** der Bausatz einen auf der Dachaußenfläche (9) in zwei Richtung verfahrbares Außenabschattungspaneel (10) aufweist.

14. Bausatz nach Anspruch 13, **dadurch gekennzeichnet, dass** das Außenabschattungspaneel (10) aus fotovoltaischen Elementen aufgebaut ist.

15. Bausatz nach Anspruch 13 oder 14, **dadurch gekennzeichnet, dass** auf der Unterseite des Außenabschattungspaneels (10) Reinigungsdüsen angebracht sind.

## Claims

1. A kit for an energy-saving house, with a double-glazed winter garden (1) and a house body (2), **characterised in that** the enclosed volume of the winter garden (1) exceeds that of the house body (2) by a multiple and the winter garden (1) surrounds the house body (2) on all sides in the form of a weather enclosure.

2. A kit according to Claim 1, **characterised in that** the house body (2) can be arranged off-centre inside the winter garden (1) and the winter garden has openings for the passage of service ducts such as a flue or ventilation shaft for the house body.

3. A kit according to Claim 1 or 2, **characterised in that** the winter garden (1) has air-inlet openings (4) in the footing zone (3) and air-outlet openings (6) in the ridge zone.

4. A kit according to Claim 3, **characterised in that** the air-inlet openings (4) are formed by inwardly opening flaps (7) pivotable about a bottom-mounted hinge (8).

5. A kit according to Claim 3 or 4, **characterised in that** a plurality of air-inlet and air-outlet openings (4,6) extend over the entire ridge or eaves length of the winter garden.

6. A kit according to any one of Claims 1 to 5, **characterised in that** to form an air-outlet duct an inner shade (14) is provided under the roof surface (9) at a distance therefrom and in a plane substantially parallel thereto.

7. A kit according to any one of Claims 1 to 6, **characterised in that** the house body (2) is provided with moisture-compensating wall surfaces (11).

8. A kit according to any one of Claims 1 to 7, **characterised in that** the kit further comprises a swimming pool (12) which can arranged inside the winter garden (1) as a liquid evaporator.

9. A kit according to any one of Claims 1 to 8, **characterised in that** the height of the winter garden (1) exceeds the height of the house body (2) by a multiple.

10. A kit according to any one of Claims 1 to 9, **characterised in that** the house body (2) is roofless and provided with a walk-on flat ceiling (15).

11. A kit according to any one of Claims 1 to 10, **characterised in that** the kit further comprises a first heat exchanger (16), which can be arranged in the ground under the winter garden (1), and a second heat exchanger (17) which is in communication with the interior air of the house body (2).

12. A kit according to any one of Claims 1 to 11, **characterised in that** the kit comprises plants (18) as an air filter, which can be arranged in the interior of the winter garden (1).

13. A kit according to any one of Claims 1 to 12, **characterised in that** the kit has an external shading panel (10) which can be displaced in two directions on the roof outer surface (9).

14. A kit according to Claims 13, **characterised in that** the external shading panel (10) is constructed from photovoltaic elements.

15. A kit according to Claims 13 or 14, **characterised in that** cleaning nozzles are mounted on the underside of the external shading panel (10).

## Revendications

1. Ensemble d'éléments de construction pour une maison à consommation d'énergie réduite, avec un jardin d'hiver (1) à vitrage isolant et un corps de maison (2), **caractérisé en ce que** le volume intérieur du jardin d'hiver (1) est largement supérieur à celui du corps de maison (2) et **en ce que** le jardin d'hiver (1) entoure le corps de maison (2) de tous les côtés, agissant ainsi comme une enveloppe de protection.

2. Ensemble d'éléments de construction selon la revendication 1, **caractérisé en ce que** le corps de maison (2) peut être disposé de manière excentrée à l'intérieur du jardin d'hiver (1) et **en ce que** le jardin d'hiver comporte des ouvertures permettant de faire passer vers le corps de maison de gaines de distribution comme une cheminée ou une cheminée de ventilation.

3. Ensemble d'éléments de construction selon la revendication 1 ou 2, **caractérisé en ce que** le jardin d'hiver (1) comporte au niveau de son soubassement (3) des ouvertures d'entrée d'air (4) et au niveau du faîte des ouvertures de sortie d'air (6).

4. Ensemble d'éléments de construction selon la revendication 3, **caractérisé en ce que** les ouvertures d'entrée d'air (4) sont formées au moyen de clapets (7) pouvant pivoter autour d'une charnière inférieure (8) et s'ouvrant vers l'intérieur.

5. Ensemble d'éléments de construction selon la revendication 3 ou 4, **caractérisé en ce qu'**une pluralité d'ouvertures d'entrée d'air et de sortie d'air (4, 6) s'étendent sur toute la longueur du faîte et/ou de l'avant-toit du jardin d'hiver.

6. Ensemble d'éléments de construction selon l'une des revendications 1 à 5, **caractérisé en ce que** pour la formation d'une gaine de sortie d'air, un écran de protection intérieur (14) est prévu à une distance à peu près plane et parallèle en dessous de la surface du toit (9).

7. Ensemble d'éléments de construction selon l'une des revendications 1 à 6, **caractérisé en ce que** le corps de maison (2) est pourvu d'un revêtement de paroi (11) anti-moisissures.

8. Ensemble d'éléments de construction selon l'une des revendications 1 à 7, **caractérisé en ce que** l'ensemble d'éléments de construction comprend en outre une piscine (12), qui peut être placée à l'intérieur du jardin d'hiver (1) en tant que gazéificateur de liquide.

9. Ensemble d'éléments de construction selon l'une des revendications 1 à 8, **caractérisé en ce que** la hauteur du jardin d'hiver (1) dépasse plusieurs fois la hauteur du corps de maison (2).

10. Ensemble d'éléments de construction selon l'une des revendications 1 à 9, **caractérisé en ce que** le corps de maison (2) sans toit est équipé d'un plancher-dalle (15) accessible.

11. Ensemble d'éléments de construction selon l'une des revendications 1 à 10, **caractérisé en ce que** l'ensemble d'éléments de construction comprend en outre un premier échangeur thermique (16), lequel peut être placé au niveau du sol en dessous du jardin d'hiver (1), et un second échangeur thermique (17) qui communique avec l'air intérieur du corps de maison (2).

12. Ensemble d'éléments de construction selon l'une des revendications 1 à 11, **caractérisé en ce que** l'ensemble d'éléments de construction comprend des plantes (18) qui servent de filtre à air et qui peuvent être placées à l'intérieur du jardin d'hiver (1).

13. Ensemble d'éléments de construction selon l'une des revendications 1 à 12, **caractérisé en ce que** l'ensemble d'éléments de construction comprend un panneau d'écran de protection extérieur (10) réglable dans deux sens sur la surface extérieure du toit (9).

14. Ensemble d'éléments de construction selon la revendication 13, **caractérisé en ce que** le panneau d'écran de protection extérieur (10) est construit avec des éléments photovoltaïques.

15. Ensemble d'éléments de construction selon la revendication 13 ou 14, **caractérisé en ce que** sur la face inférieure du panneau solaire extérieur (10), des buses de nettoyage sont montées.
